# EUROPEAN PATENT APPLICATION

(11) **EP 3 108 772 A1**
(43) Date of publication of application: **28.12.2016**
(21) Application number: 16175922.0
(22) Date of filing: 23.06.2016
(51) Int. Cl.: A47D 13/06, A47D 7/04, A47D 5/00, A47D 13/10

(54) **MODULAR RECONFIGURABLE INFANT-CONTAINMENT AND JUVENILE ENTERTAINMENT PRODUCTS**

(30) Priority: 24.06.2015 US 201562184235 P
(71) Applicant: Kids II, Inc., Atlanta, GA 30305-1712 (US)
(72) Inventor: SCLARE, Jacob, Dacula, GA 30019 (US); BURNS, Stephen R., Cumming, GA 30041 (US); LANGE, Eric, Alpharetta, GA 30022 (US)
(74) Representative: McCartney, Jonathan William

(57) **Abstract**

A modular reconfigurable child containment and entertainment product, including a foldable frame structure (10) to which one or more accessories or modules are interchangeably attached. A stationary module and a mobile module can be used in combination, or the mobile module can be used independently of the stationary module, for example as a co-sleeper (750). A projector (1020) or other entertainment features can be included, as well as a child monitor (1478).

## Description

### Cross-Reference to Related Application

This application claims the benefit of U.S. Provisional Patent Application Serial No. 62/184,235 filed June 24, 2015, the entirety of which is hereby incorporated herein by reference for all purposes.

### Technical Field

The present invention relates generally to the field of children's products or accessories, and more particularly to reconfigurable infant containment and entertainment products.

### Background

Many children's products and accessories such as play-yards, bassinets, changing tables, and other child containment and/or support devices are often limited to particular modes of use, and typically are not easily adaptable to different applications as a child grows or as the needs of a caregiver may change. Additionally, many children's products and accessories are bulky and not easily transported, and often lack entertainment or educational features that may be desirable for a developing child.

Accordingly, it can be seen that needs exist for improved children's products and accessories adaptable to multiple applications or different modes of use, for more easily transportable or reconfigurable children's products and accessories, and/or for such children's products and accessories incorporating entertainment / educational features and functionality. It is to the provision of improved children's products and accessories meeting these and other needs that the present invention is primarily directed.

### Summary

The present invention relates to modular and reconfigurable infant-containment and juvenile entertainment products, systems and methods. In example embodiments, the present invention provides improved children's products and accessories adaptable to multiple applications and/or different modes of use, more easily transportable and/or reconfigurable children's products and accessories, and/or children's products and accessories combining utilitarian and entertainment / educational features and functionality. In example embodiments, different stages or modes of use of the children's products and accessories take the form of a play-yard, bassinet, changing station or table, storage unit, play house, bouncer, projection and display system, and/or other infant or child support and/or containment units, products or accessories.

In one aspect, the present invention relates to a reconfigurable child containment system including a structural support frame, and a plurality of modular accessories for interchangeable attachment to the structural support frame, each of the plurality of modular accessories corresponding to different developmental stages, weights, or ages of a child.

In another aspect, the invention relates to a reconfigurable child containment system including a stationary first module comprising a frame and a child containment assembly attached to the frame, and a mobile second module configured for alternative use in a first mode in combination with the stationary first module, and in a second mode independently from the stationary first module.

In still another aspect, the invention relates to a reconfigurable child containment system including a child containment unit comprising at least one projection display surface, and at least one projector for projecting a visual image onto the at least one projection display surface of the child containment unit.

These and other aspects, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of example embodiments are explanatory of example embodiments of the invention, and are not restrictive of the invention, as claimed.

### Brief Description of the Drawings

Figure 1A is a perspective view of a foldable structural frame for a child support or containment device or other children's product or accessory, shown in an open or expanded configuration, according to an example embodiment of the present invention.
Figure 1B is a perspective view of the foldable structural frame of Figure 1A, shown in a closed or folded configuration.
Figure 2 is a perspective view of a children's product incorporating the foldable structural frame of Figure 1A, according to an example embodiment of the present invention.
Figure 3A is a perspective view of a reconfigurable children's product according to another example embodiment of the present invention, incorporating the foldable structural frame of Figure 1A, and with a child containment portion in a raised or retracted configuration.
Figure 3B is a perspective view of the children's product of Figure 3A, with the child containment portion in a lowered or extended configuration.
Figure 4A is a perspective view of a reconfigurable children's product according to another example embodiment of the present invention, incorporating the foldable structural frame of Figure 1A, and with a lower containment portion in a raised or retracted configuration.
Figure 4B is a perspective view of the children's product of Figure 4A, with the child lower containment portion in a lowered or extended configuration.
Figure 5 is a perspective view of a reconfigurable children's product incorporating the foldable structural frame of Figure 1A, according to another example embodiment of the present invention.
Figure 6 is a perspective view of a children's play house supported by the foldable structural frame of Figure 1A, according to another example embodiment of the present invention.
Figure 7A is a perspective view of a reconfigurable children's product according to another example embodiment of the present invention, with a storage unit portion used in combination with a child support or containment device portion.
Figure 7B is a perspective view of the children's product of Figure 7A, with the storage unit used separately from a child support or containment device portion.
Figure 8A is a perspective view of a reconfigurable children's product according to another example embodiment of the present invention, with a storage unit portion used in combination with a child support or containment device portion.
Figure 8B is a perspective view of the children's product of Figure 8A, with the storage unit used separately from a child support or containment device portion.
Figure 9 is a perspective view of a children's play house including a bouncing or rocking support frame.
Figure 10 is a perspective view of a children's product incorporating projection and display entertainment and educational features and functionality, according to another example embodiment of the invention.
Figure 11 is a perspective view of a children's product incorporating projection and display entertainment and educational features and functionality, according to another example embodiment of the invention.
Figure 12 is a perspective view of a children's product incorporating projection and display entertainment and educational features and functionality, according to another example embodiment of the invention.
Figure 13 is a perspective view of a children's product incorporating projection and display entertainment and educational features and functionality, according to another example embodiment of the invention.
Figure 14 is a perspective view of a children's product according to another example embodiment of the invention.

### Detailed Description of Example Embodiments

The present invention may be understood more readily by reference to the following detailed description of example embodiments taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention. Any and all patents and other publications identified in this specification are incorporated by reference as though fully set forth herein.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

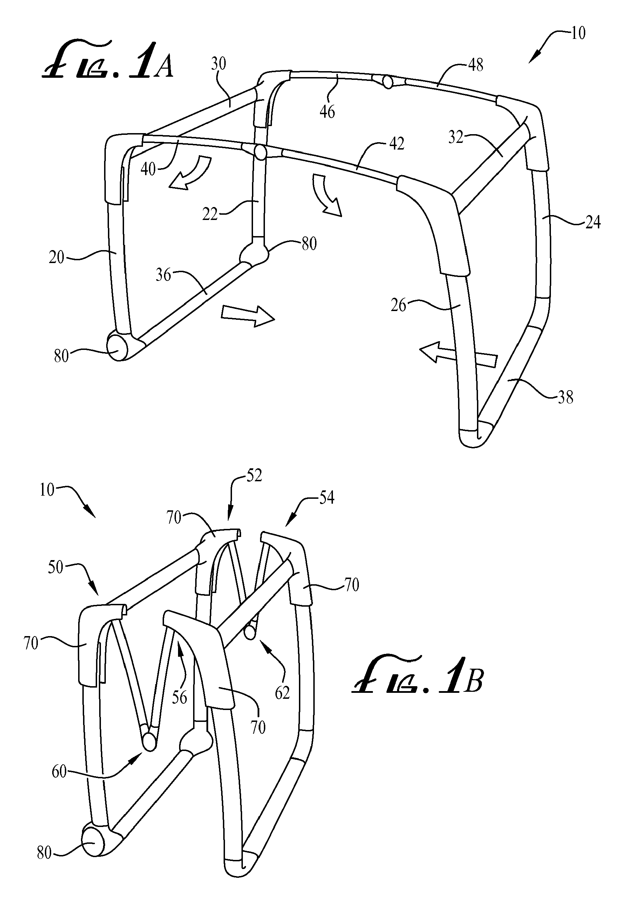

With reference now to the drawing figures, wherein like reference numbers represent corresponding parts throughout the several views, Figures 1 - 6 show various components and stages of a modular reconfigurable children's product or system according to example embodiments of the invention. Figures 1A and 1B show a foldable support frame 10, to which various different soft-goods structures and accessories can be interchangeably mounted, resulting in different product configurations suited to a child's stage of development and/or the changing needs of a care-giver for the child. The frame 10 includes four generally upright or vertical corner posts 20, 22, 24, 26, arranged in generally rectangular form. Upper end cross-members 30, 32 extend between upper portions of corner post end-pairs 20, 22 and 24, 26 at each end (left and right) of the frame 10; and lower end cross members 36, 38 extend between lower portions of the corner post end-pairs at each end of the frame. Alternative embodiments can be formed without lower end cross members 36, 38. Upper side-rails extend between upper portions of corner post side-pairs 20, 26 and 22, 24 along each side (front and back) of the frame 10, each of the upper side-rails including first and second side-rail segments 40, 42 and 46, 48, respectively, hingedly connected to one another at midpoints of each upper side-rail. In example embodiments, there are no lower side-rails between lower portions of the corner posts below the upper side rails. Alternatively, lower side-rails can be provided between lower portions of corner post side-pairs 20, 26 and 22, 24 along either or both sides (front and/or back) of the frame 10.

The frame 10 includes pivotal or hinged corner joints 50, 52, 54, 56 pivotally coupling upper ends of the corner posts 20, 22, 24, 26, and the distal ends of side-rail segments 40, 46, 48, 42, respectively; and also includes pivotal or hinged side-rail joints 60, 62 pivotally coupling proximal ends of the side-rail segments 40, 42 and 46, 48 of each side-rail, to allow folding of the frame as shown in Figure 1B. In this manner, a user can fold and unfold the frame 10 as desired, between an open or expanded configuration shown in Figure 1A for use, and a closed or folded configuration shown in Figure 1B for storage or transport. One or more of the side-rail joints 60, 62 and/or the corner joints 50, 52, 54, 56 preferably incorporate locking and unlocking latch or retainer mechanisms for holding the frame in the open or expanded configuration during use, until released by a user for folding of the frame. The side-rails and corner posts are optionally arched or bowed outwardly and upwardly, for stability and structural strength and/or for an aesthetically appealing design. The frame 10 optionally includes covers or housings 70 around the corner joints 50, 52, 54, 56 and/or the side-rail joints 60, 62, to which the hinge mechanisms may be mounted, and/or to shield pinch-points from user contact. Wheels 80 are optionally provided on the base of the frame 10, for example at lower ends of one or more of the corner posts, for example in the depicted embodiment at lower ends of two corner posts 20, 22, for improved portability and mobility. Alternatively, wheels 80 can be provided at all four corners of the base of the frame 10. The wheels 80 can optionally comprise caster wheels pivotally mounted to the frame for maneuverability.

The structural elements of the frame, including the corner posts, upper and lower end cross-members, and side-rails are preferably formed of substantially rigid materials providing structural strength to support the intended loading of the product, for example fabricated from aluminum, steel or other metals, plastics, polymers, composites and/or other materials, formed as solid bars, beams, hollow tubular members, and/or other configurations, for example by extrusion, molding and/or other manufacturing processes. One or more structural elements of the frame can be separately formed and attached to adjacent structural element(s) by fasteners, welding, adhesive, couplings, or other attachment means; or alternatively can be integrally formed as one or more unitary components. In example embodiments, the folded end-to-end dimension of the frame 10 is no more than about one-half the expanded end-to-end dimension of the frame (L_{folded} ≤ 0.5 L_{expanded}), and more preferably no more than about one-quarter the expanded end-to-end dimension of the frame (L_{folded} ≤ 0.25 L_{expanded}).

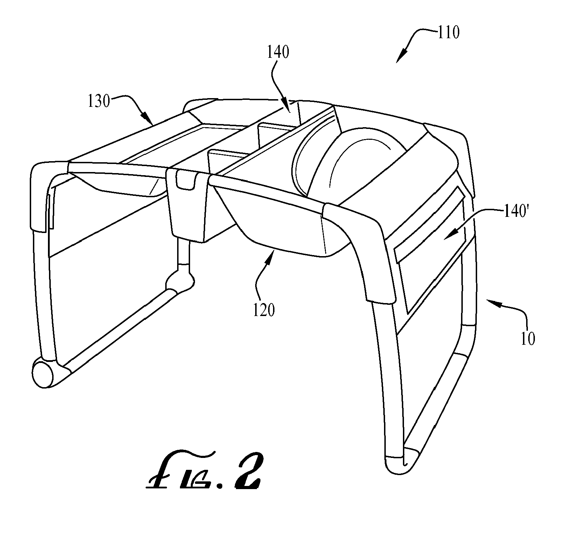

The frame 10 can be used in connection with a variety of different interchangeable modules or accessories, to allow reconfiguration of the children's product or system between various stages of use, as a child grows and as the needs of the child's care-givers change. For example, Figure 2 shows a modular reconfigurable children's product 110 according to an example form of the invention, for example in a stage for use with a child of about 0-5 months old and/or a child who is unable to sit up on his own. The children's product 110 generally comprises a substantially rigid structural frame, with one or more children's accessories or modules detachably mounted thereto. The structural frame is optionally a foldable frame substantially in the form of the above-described frame 10, or alternatively can take various other forms. In the depicted embodiment, the children's accessories or modules mounted to the frame 10 include an inclined sleeper 120, or alternatively a bassinet or other child containment unit, positioned toward one end of the product 110, and supported by side-rails and/or an upper end cross-member of the frame 10. The accessories of the product 110 also include a changing table 130 or other child support unit, and/or one or more storage compartments 140, 140' for containing diapers, clothing, blankets, bottles, or other children's gear or care items. The accessories of the product 110 can be formed of fabric, mesh and/or other soft goods or compressible materials, and/or substantially rigid materials. The accessories are preferably removably and interchangeably attached to the frame, for example by fabric panels of the accessories wrapped over or around the side-rails, upper end cross-members or other structural elements of the frame 10; by one or more zippers, hooks, clips, hook-and-loop fastener material, buttons, and/or other attachment means. The accessories or modules of the product 110, including the sleeper 120, changing table 130 and storage compartment(s) 140 can be integrally formed or attached to one another by stitching or the like, or alternatively can be separate components individually mounted to the frame 10; and can be removable from the frame and usable in a second or alternate configuration, for example as a stand-alone sleeper, changing table and/or storage unit.

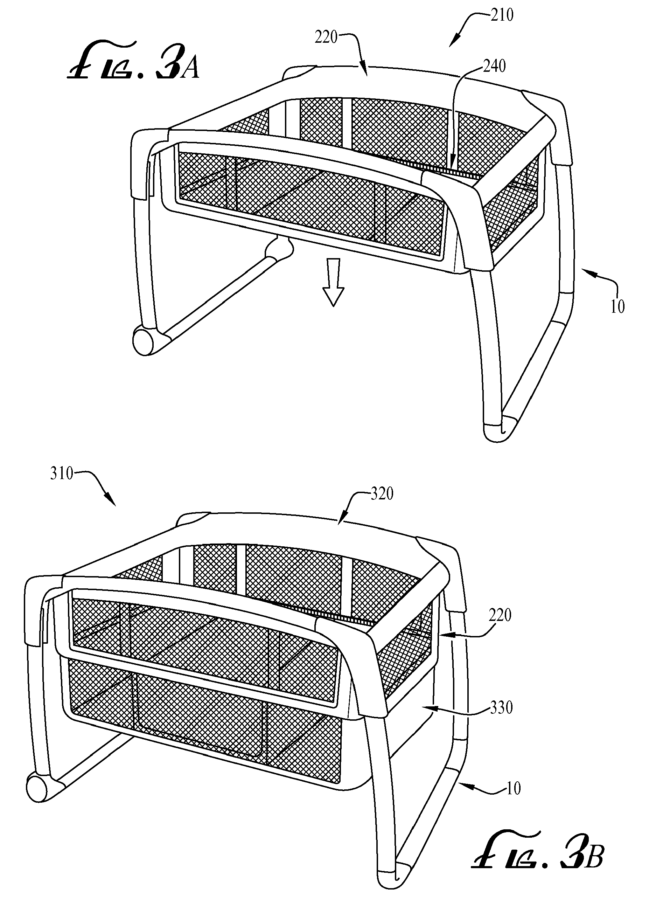

Figures 3A and 3B show additional stages of a modular reconfigurable children's product 210, 310 according to example forms of the invention, for example for use with a child of about 6-12 months old and/or a child able to sit up on his own (Figure 3A) and of about 12 months and up and/or a child able to pull himself up to standing (Figure 3B). These stages of the product 210, 310 also include the structural frame 10 as described above, with soft goods child support and/or containment accessories or modules detachably and interchangeably mounted thereto. In the product stage 210 shown in Figure 3A, a bassinet 220 is mounted to the frame 10, for example by fabric panels wrapped over or around the side-rails, upper end cross-members or other structural elements of the frame 10; by one or more zippers, hooks, clips, hook-and-loop fastener material, buttons, and/or other attachment means. The bassinet 220 can be formed of fabric, mesh and/or other soft goods or compressible materials, and/or substantially rigid materials. Optionally, one or more storage compartments can be provided underneath or alongside the bassinet 220. The bassinet 220 includes four side-walls, a floor, and an open top for access to a child-receiving compartment or chamber within the bassinet. Optionally, a foldable and removable mattress or pad is provided for placement on the floor of the bassinet. The bassinet 220 is optionally expandable, for example having a zipper portion 240 around the periphery of the sidewalls that engages with a zipper portion around the floor to shorten the sidewalls and maintain the floor at bassinet height (Figure 3A), with expansion portions of the fabric contained under the mattress; and when the zipper portions are disengaged, the sidewalls are allowed to expand downwardly into a play-yard configuration (Figure 3B).

In the product stage 310 shown in Figure 3B, the soft goods accessory material or module mounted to the frame of the product is in the form of a play-yard 320. As described above, the play-yard 320 can be an expanded reconfiguration of the bassinet 220 of the stage shown in Figure 3A, with the expansion portions 330 of the fabric extended below the bassinet portions 220, forming a child receiving compartment of greater height than in the bassinet stage. Alternatively, the play-yard 320 can be a separate accessory for interchangeable attachment to the frame 10 independently of the bassinet. In the play-yard stage or configuration, the soft goods accessory material mounted to the frame 10 forms four sidewalls and a play-yard floor, with an open top for access to the child-receiving compartment or chamber of the play-yard, with the play-yard floor extending down to about or adjacent the elevation of the underlying floor or support surface on which the frame 10 is supported. A foldable mattress or pad is optionally provided for placement on the play-yard floor.

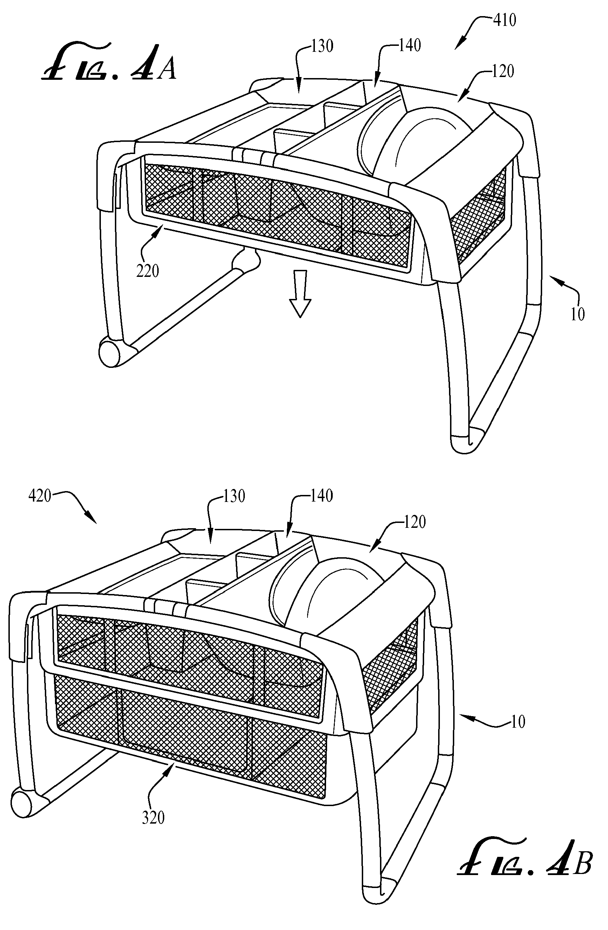

Figures 4A and 4B show additional stages of the modular reconfigurable children's product 410, 420 according to example forms of the invention. In these stages, the sleeper 120, changing table 130 and storage compartment 140 as described above with regard to Figure 2 are utilized in combination with the bassinet stage described above with regard to Figure 3A (Figure 4A), and in combination with the play-yard stage described above with regard to Figure 3B (Figure 4B). In this manner, the product can be reconfigured to use the accessory modules of two or more stages in combination with one another, or alternatively can be reconfigured to use the accessory modules of the different stages independently of one another.

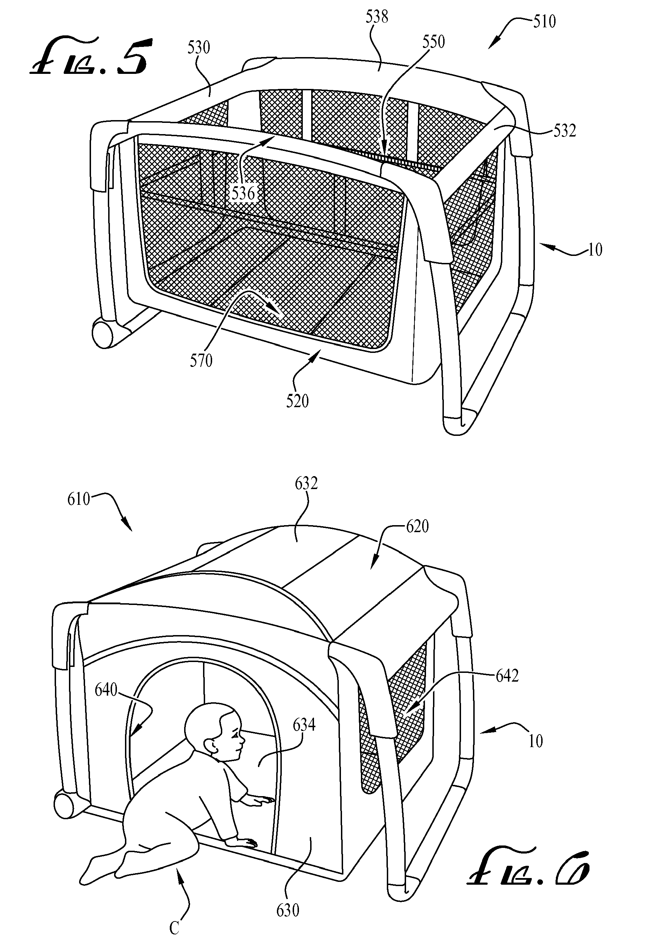

Figure 5 shows an alternate play-yard configuration of a children's product 510 according to another example form of the invention. Similar to the embodiment of Figure 3B, the soft goods accessory material or module is attached to and supported by the frame 10 and forms a play-yard child containment 520 having four sidewalls and a play-yard floor, with an open top for access to the child containment area. The play-yard containment 520 includes end panel attachment flaps 530, 532 and front and back side panel attachment flaps 536, 538, which wrap over or around the upper end cross-members and upper side-rails of the frame 10, and attach by one or more zippers, hooks, clips, hook-and-loop fastener material, buttons, and/or other attachment means to detachably secure the play-yard containment to the frame. The attachment means can engage between the play-yard containment and the frame, or alternatively can attach one portion of the play-yard containment to another portion of the play-yard containment around the frame. A zipper 550, and/or one or more hooks, clips, buckles, straps or other attachment means is/are optionally provided along the sidewalls of the play-yard child containment 520 to attach a bassinet panel at an elevated position above the play-yard floor, to reconfigure the play yard for use as a bassinet. A folding mattress or pad 570 is optionally provided for placement on the play-yard floor and/or the bassinet panel.

Figure 6 shows another stage of the modular reconfigurable children's product 610 according to an example form of the invention. In this stage, an accessory or module in the form of a tent or play-house / fort enclosure 620 is attached to the frame 10. A toddler or older child C who has outgrown the use of the sleeper, bassinet and play-yard stages of the product can utilize the play-house 620 as a play area, for storage of toys, etc. The play-house 620 can be detachably secured to the frame 10 in similar fashion as described above, and includes one or more sidewalls 630, a roof 632 and a play-house floor 634. The play-house floor 634 can be configured to rest on an underlying floor or support surface upon which the frame 10 is supported. One or more doors or portals 640 are optionally formed in sidewall portions 630, optionally including closure panels having zippers or other means for closing the portals. One or more windows 642 are optionally also provided, optionally including a mesh or screen covering removably or permanently secured over the window opening. The play-house 620 can be formed of fabric, mesh and/or other flexible materials.

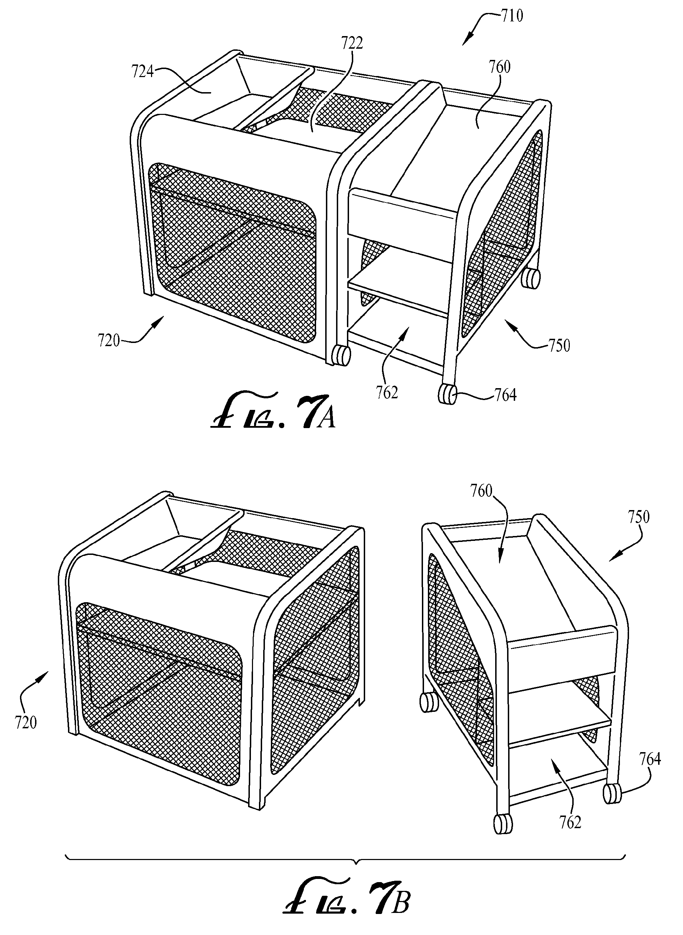

Figures 7A and 7B show a modular reconfigurable children's product or system 710 according to another example embodiment of the invention. The children's product 710 includes a stationary first module or component 720 in the form of a play-yard, and optionally includes a removable bassinet panel 722 and/or a child support unit such as a changing table area 724. The first module or component 720 includes a structural frame, optionally as described above, and fabric or soft goods attached to the frame to form the play-yard enclosure. The children's product 710 also includes a mobile second module or component 750, which can include a bassinet or sleeper 760 and one or more storage compartments 762, and optionally wheels or casters 764 for mobility. In alternative embodiments, the locations of the changing table area 724 and the sleeper 760 can be reversed. The mobile second module or component 750 can be used in combination with or attached to the stationary first module or component 720, as shown in Figure 7A; or alternatively the mobile second module or component can be used separately and independently from the stationary first module or component as shown in Figure 7B, for example as a co-sleeper for a child to sleep next to a parent's bed, or to move a child from room to room with a parent or caregiver. In example embodiments, the mobile second module 750 has a height and a front-to-back depth approximately equal to the corresponding height and depth dimensions of the first module 720 to present a uniform profile and consistent unitary appearance when the modules are used in combination (Fig. 7A). In example embodiments, the mobile second module 750 has an end-to-end width of less than the corresponding end-to-end width dimension of the first module 720 (W_{mobile} < W_{stationary}), for example no more than about three-quarters (75%) the corresponding end-to-end width dimension (W_{mobile} ≤ 0.75 W_{stationary}), and in particular embodiments equal to or less than about six-tenths (60%) the corresponding end-to-end width dimension (W_{mobile} ≤ 0.60 W_{stationary}), for improved mobility and maneuverability in use.

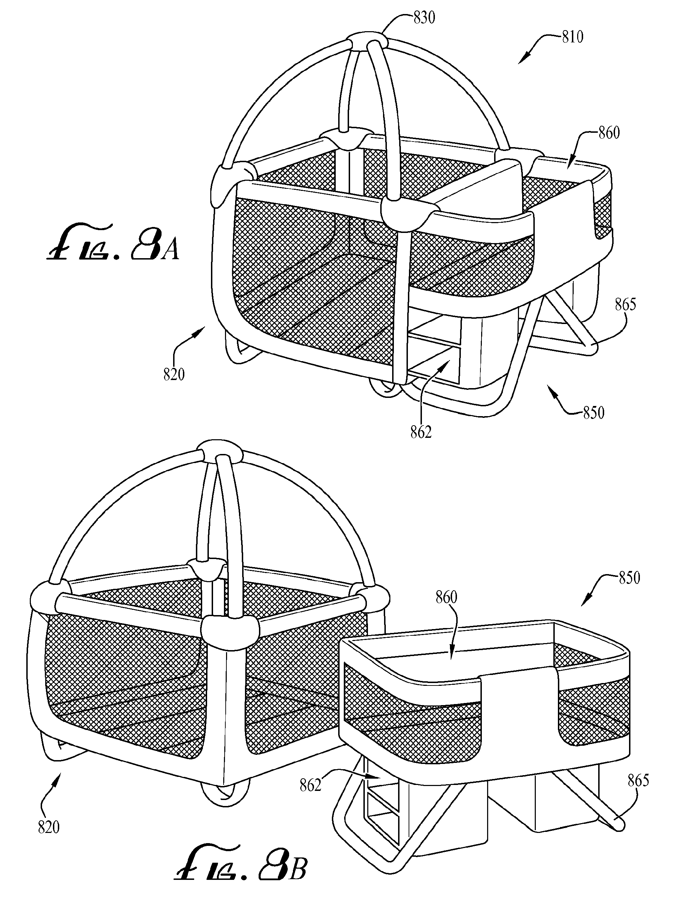

Figures 8A and 8B show another modular reconfigurable children's product or system 810 according to an example embodiment of the invention. The children's product 810 includes a stationary first module or component 820 in the form of a play-yard, and optionally includes a canopy frame or toy bar 830 over the play yard enclosure. The first module or component 820 includes a structural frame, optionally as described above, and fabric or soft goods attached to the frame to form the play-yard enclosure. The children's product 810 also includes a mobile second module or component 850, which can include a bassinet or sleeper 860 and one or more storage compartments 862, and optionally a foldable support sub-frame 865. The mobile second module or component 850 can be used in combination with or attached to the stationary first module or component 820, as shown in Figure 8A; or alternatively the mobile second module or component can be used separately and independently from the stationary first module or component as shown in Figure 8B, for example as a co-sleeper for a child to sleep next to a parent's bed, or to move a child from room to room with a parent or caregiver. In example embodiments, the mobile second module 850 has a height and a front-to-back depth approximately equal to the corresponding height and depth dimensions of the first module 820 to present a uniform profile and consistent unitary appearance when the modules are used in combination (Fig. 8A). In example embodiments, the mobile second module 850 has an end-to-end width of less than the corresponding end-to-end width dimension of the first module 820 (W_{mobile} < W_{stationary}), for example no more than about three-quarters (75%) the corresponding end-to-end width dimension (W_{mobile} ≤ 0.75 W_{stationary}), and in particular embodiments equal to or less than about one-half (50%) the corresponding end-to-end width dimension (W_{mobile} ≤ 0.50 W_{stationary}), for improved mobility and maneuverability in use.

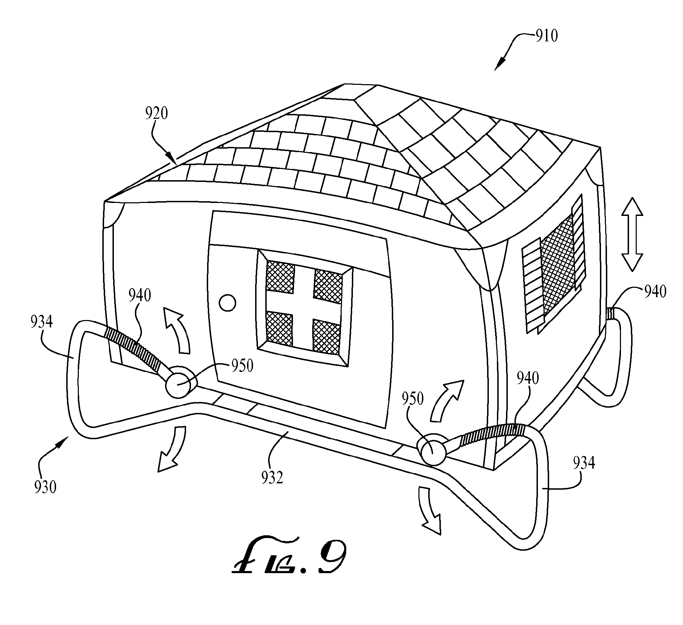

Figure 9 shows another modular reconfigurable children's product or system 910 according to an example embodiment of the invention. The children's product 910 includes a child containment device 920 coupled to a frame 930 via at least one resilient member 940. The frame 930 can be configured to rest on a support surface and support the child containment device 920 such that the child containment device can bounce and/or rock relative to the support surface. The child containment device 920 can be, for example, a play yard or play house. In the depicted embodiment, the frame 930 includes first and second base structures 932 with U-shaped support leg members 934 at each end, incorporating springs or resilient members 940 positioned at or adjacent mounting hubs 950 to which a play house 920 is mounted. According to example embodiments, the child containment device 920 can be selectively removed from the frame 930 and an alternative child containment device, such as a bassinet or sleeper, can be attached to the frame.

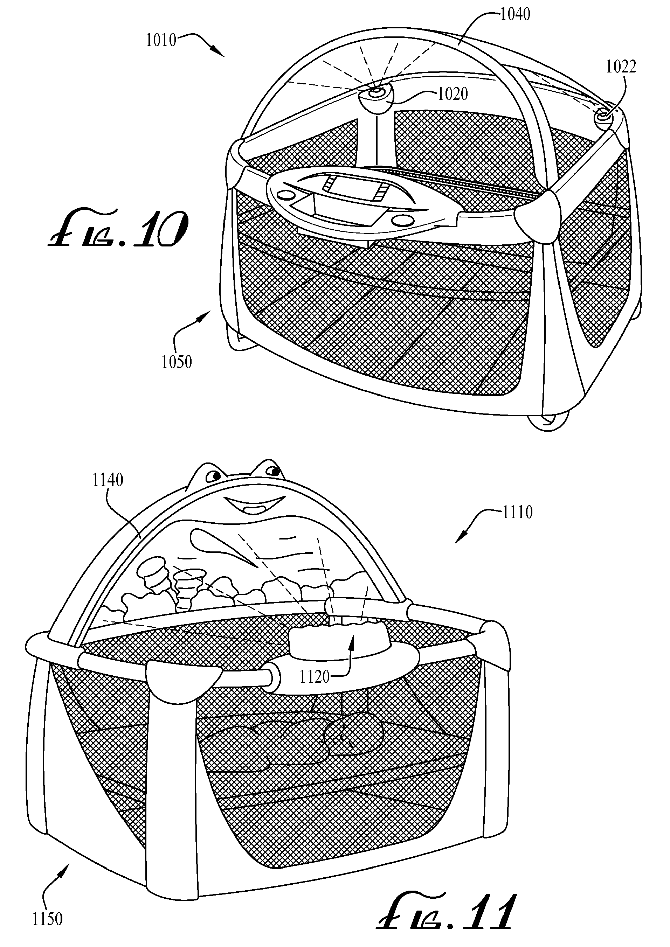

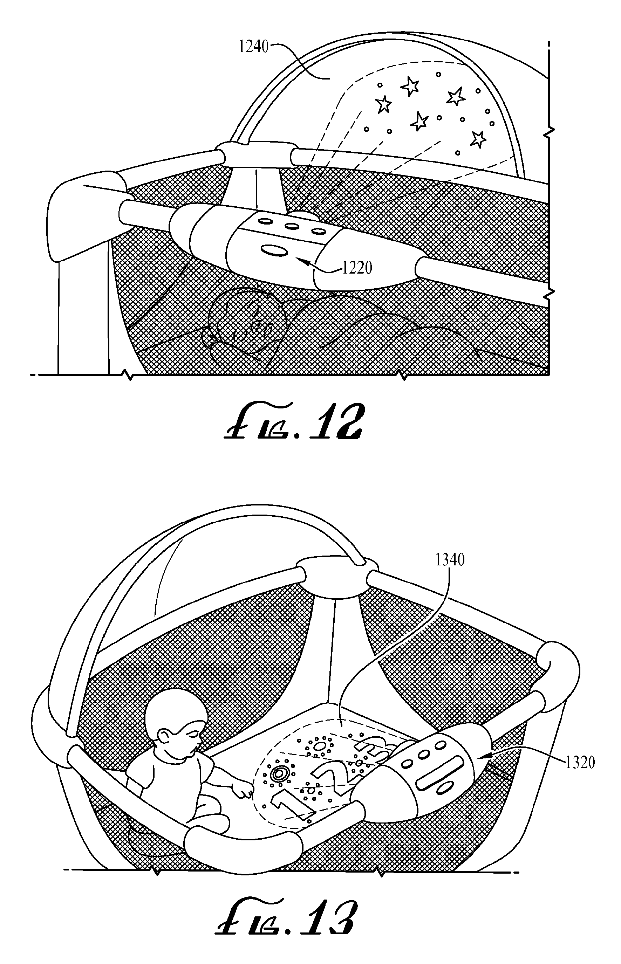

Figures 10, 11, 12 and 13 show example embodiments of a reconfigurable children's device or system having one or more projector(s) and projection display surface(s) for child entertainment and educational purposes. The projector(s) are optionally reconfigurable to project different images, colors, patterns or the like, on one or more projection display surfaces. The image projected can be, for example, soothing or stimulating. The children's device can further include a control panel by which a parent or caregiver can control the projector and/or other features of the product or system. For example, in the device 1010 shown in Figure 10, two background projectors 1020, 1022 mounted to the back of the product's frame project mood lighting or simulated environmental light (sunrise, daytime, dusk, night-time) onto a projection display surface on an interior of a canopy 1040 over the child containment device 1050. In the example embodiment of the device 1110 shown in Figure 11, a primary projector 1120 mounted to the front of the frame projects animated or still images onto a projection display surface on an interior of a character-themed canopy 1140 over the child containment device 1150. As shown in Figures 12 and 13, the projector 1220, 1320 can be reconfigured or reoriented to project images upwardly onto an upper canopy display surface 1240 over the child containment device (Figure 12), or alternatively to project images downwardly onto a play-yard floor 1340 or other lower display surface of the child containment device (Figure 13) or onto an external surface, such as a wall or a ceiling of a room.

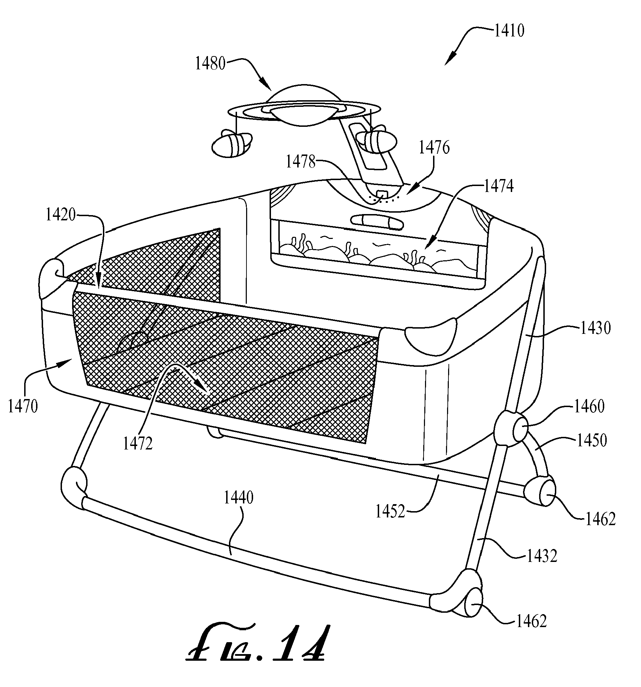

Figure 14 shows another modular reconfigurable children's product or system 1410 according to an example embodiment of the invention. The children's product 1410 takes the form of a co-sleeper or other sleep product, and optionally can be used in combination with a play-yard or other child containment or entertainment product as described herein, or alternatively can be used independently. The device 1410 includes a structural support frame comprising a generally rectangular or oval upper frame assembly 1420; a base frame assembly comprising upper and lower support leg members 1430, 1432, and a lower front cross-support 1440; and a rear support comprising rear support legs 1450 and a lower rear cross-support 1452. The rear support is optionally pivotally coupled to the base frame assembly by a coupling hub 1460 at each end of the frame, and/or the upper frame assembly and base frame assembly are collapsible or foldable, for folding the frame and co-sleeper into a compact state for storage and transport. One or more wheels 1462 are optionally provided at the base of the frame for mobility. A soft goods child support or containment unit 1470 is detachably or permanently attached to the support frame, and includes side-wall panels and a containment floor, with an open top for access. A foldable mattress or floor pad 1472 is optionally provided for placement over the containment floor of the child support or containment unit 1470. The child support or containment unit 1470 optionally includes a display panel 1474 or projection surface on which an image, pattern, light effects, and/or animated display may be projected or displayed. An audio speaker or soother 1476 can optionally also be provided for playing sounds, music, white noise or other soothing or entertaining sounds. A camera or other monitoring device 1478 can optionally be provided, optionally in combination with a wireless transmitter for allowing a parent or caregiver to monitor a child positioned in the containment unit 1470, for example to monitor sleep position, waking, etc. In example embodiments, the monitoring device optionally includes an infrared mode or sensor, wherein a parent can monitor a child's temperature. A mobile 1480 is optionally mounted to the frame over the child support or containment unit 1470, including one or more toys or entertainment features.

In use, a child's caregiver can select the desired modules and/or accessories for use in view of the caregiver's anticipated needs and the child's stage of development. For example, when traveling, modules and/or accessories not needed for the intended usage can be left at home and need not be transported. The caregiver sets up the children's product or system for use by positioning the frame in its unfolded state, and attaching the desired module(s) and/or accessories to the frame, for example in sleeper, bassinet, play-yard or play house mode. As a child grows and develops, the modules and/or accessories can be interchangeably removed and replaced to reconfigure the product to various different stages of use to suit the child's and the caregiver's needs and preferences. Alternatively, one or more modules and/or accessories can be reconfigured while in place on the frame, for example expanding the bassinet configuration to the play-yard configuration. One, two or more modules and/or accessories can be mounted to the frame, for independent use or for use in various combinations. One or more components or portions of the product or system can be separated from other components or portions, for independent use, or for selective configuration in combination or separately. Entertainment features such as bouncing or rocking elements, projection of images or audiovisual entertainment, playing sounds, light effects, toys, mobiles, or the like are optionally activated by the caregiver to entertain and/or provide educational stimulation for the child. Monitoring features can also optionally be provided and actuated locally or remotely by a caregiver.

While the invention has been described with reference to example embodiments, it will be understood by those skilled in the art that a variety of modifications, additions and deletions are within the scope of the invention, as defined by the following claims.

For the avoidance of doubt, the present application extends to the subject-matter described in the following numbered paragraphs (referred to as "Para" or "Paras"):
1. A reconfigurable child containment system comprising:
   a structural support frame; and
   a plurality of modular accessories for interchangeable attachment to the structural support frame, each of the plurality of modular accessories corresponding to different developmental stages of a child.
2. The reconfigurable child containment system of Para 1, wherein the structural support frame is foldable between an expanded configuration and a folded configuration.
3. The reconfigurable child containment system of Para 2, wherein in the expanded configuration the structural support frame comprises a generally rectangular structure comprising four upright corner posts, two upper end cross-members extending between upper portions of end-pairs of the upright corner posts, and two upper side rails extending between upper portions of side-pairs of the upright corner posts.
4. The reconfigurable child containment system of Para 3, wherein the upper side rails each comprise first and second side-rail segments pivotally connected to one another.
5. The reconfigurable child containment system of Para 3 or 4, further comprising lower end cross members extending between lower portions of the end-pairs of the upright corner posts.
6. The reconfigurable child containment system of any of Paras 3-5, without lower side-rails between lower portions of the side-pairs of the upright corner posts.
7. The reconfigurable child containment system of any preceding Para, wherein the plurality of modular accessories comprise at least two selected from an infant sleeper unit, a changing table, a storage compartment, a bassinet, a play-yard, and a play house.
8. The reconfigurable child containment system of Para 7, wherein at least two of the plurality of modular accessories are usable in combination with one another.
9. The reconfigurable child containment system of Para 7 or 8, wherein at least one of the plurality of modular accessories is reconfigurable between a first mode of use and a second mode of use.
10. The reconfigurable child containment system of any of Paras 7-9, wherein the first mode is a bassinet and the second mode is a play-yard.
11. The reconfigurable child containment system of any preceding Para, further comprising a mobile second module, usable alternatively in a first configuration in combination with the structural support frame and the plurality of modular accessories, and in a second combination independently of the structural support frame and the plurality of modular accessories.
12. The reconfigurable child containment system of Para 11, wherein the mobile second module comprises an infant co-sleeperfor positioning adjacent an adult bed.
13. The reconfigurable child containment system of any preceding Para, wherein the structural support frame comprises at least one resilient member for imparting a bouncing or rocking motion to a selected one of the plurality of modular accessories attached to the structural support frame.
14. The reconfigurable child containment system of any preceding Para, further comprising a projector for projecting images onto a display surface.
15. The reconfigurable child containment system of Para 14, wherein the projector is reconfigurable between a first display mode and a different second display mode.
16. The reconfigurable child containment system of any preceding Para, further comprising a monitoring device for monitoring a child positioned in a selected one of the plurality of modular accessories attached to the structural support frame.
17. A reconfigurable child containment system comprising:
   a stationary first module comprising a frame and a child containment assembly attached to the frame; and
   a mobile second module configured for alternative use in a first mode in combination with the stationary first module, and in a second mode independently from the stationary first module.
18. The reconfigurable child containment system of Para 17, wherein the stationary first module comprises a play-yard.
19. The reconfigurable child containment system of Para 17 or 18, wherein the mobile second module comprises an infant co-sleeper for positioning adjacent an adult bed.
20. The reconfigurable child containment system of any of Paras 17-19, wherein the stationary first module comprises a play-yard, and wherein the mobile second module comprises an infant co-sleeper for positioning adjacent an adult bed.
21. The reconfigurable child containment system of any of Paras 17-20, wherein the mobile second module comprises an infant sleeping compartment and at least one storage compartment separate from the infant sleeping compartment.
22. The reconfigurable child containment system of any of Paras 17-21, wherein the mobile second module comprises wheels for rolling mobility.
23. The reconfigurable child containment system of any of Paras 17-22, wherein the stationary first module further comprises a plurality of modular accessories for interchangeable attachment to the frame, each of the plurality of modular accessories corresponding to different developmental stages of a child.
24. The reconfigurable child containment system of Para 23, wherein the frame is foldable between an expanded configuration and a folded configuration.
25. The reconfigurable child containment system of Para 23 or 24, wherein the plurality of modular accessories comprise at least two selected from an infant sleeper unit, a changing table, a storage compartment, a bassinet, a play-yard, and a play house.
26. The reconfigurable child containment system of any of Paras 17-25, wherein the frame comprises at least one resilient member for imparting a bouncing or rocking motion to the child containment assembly.
27. The reconfigurable child containment system of any of Paras 17-26, further comprising a projector for projecting images onto a display surface.
28. The reconfigurable child containment system of any of Paras 17-27, further comprising a monitoring device for monitoring a child positioned in one of the stationary first module and the mobile second module.
29. A reconfigurable child containment system comprising:
   a child containment unit comprising at least one projection display surface; and
   at least one projector for projecting a visual image onto the at least one projection display surface of the child containment unit.
30. The reconfigurable child containment system of Para 29, wherein the child containment unit comprises a first projection display surface and a second projection display surface spaced a distance from the first projection display surface, and wherein the projector is reconfigurable to project onto a selected one of the first and second projection display surfaces.
31. The reconfigurable child containment system of Para 29 or 30, wherein the child containment unit comprises a structural support frame and a plurality of modular accessories for interchangeable attachment to the structural support frame, each of the plurality of modular accessories corresponding to different developmental stages of a child.
32. The reconfigurable child containment system of Para 31, wherein the plurality of modular accessories comprise at least two selected from an infant sleeper unit, a changing table, a storage compartment, a bassinet, a play-yard, and a play house.
33. The reconfigurable child containment system of any of Paras 29-32, wherein the child containment unit comprises a stationary first module comprising a frame and a child containment assembly attached to the frame, and a mobile second module configured for alternative use in a first mode in combination with the stationary first module, and in a second mode independently from the stationary first module.

## Claims

1. A reconfigurable child containment system comprising:
a structural support frame; and
a plurality of modular accessories for interchangeable attachment to the structural support frame, each of the plurality of modular accessories corresponding to different developmental stages of a child.

2. The reconfigurable child containment system of Claim 1, wherein the structural support frame is foldable between an expanded configuration and a folded configuration.

3. The reconfigurable child containment system of Claim 2, wherein in the expanded configuration the structural support frame comprises a generally rectangular structure comprising four upright corner posts, two upper end cross-members extending between upper portions of end-pairs of the upright corner posts, and two upper side rails extending between upper portions of side-pairs of the upright corner posts.

4. The reconfigurable child containment system of Claim 3, wherein the upper side rails each comprise first and second side-rail segments pivotally connected to one another.

5. The reconfigurable child containment system of Claim 3 or 4, further comprising lower end cross members extending between lower portions of the end-pairs of the upright corner posts.

6. The reconfigurable child containment system of any of Claims 3-5, without lower side-rails between lower portions of the side-pairs of the upright corner posts.

7. The reconfigurable child containment system of any preceding claim, wherein the plurality of modular accessories comprise at least two selected from an infant sleeper unit, a changing table, a storage compartment, a bassinet, a play-yard, and a play house.

8. The reconfigurable child containment system of Claim 7, wherein at least two of the plurality of modular accessories are usable in combination with one another.

9. The reconfigurable child containment system of Claim 7 or 8, wherein at least one of the plurality of modular accessories is reconfigurable between a first mode of use and a second mode of use.

10. The reconfigurable child containment system of any of Claims 7-9, wherein the first mode is a bassinet and the second mode is a play-yard.

11. The reconfigurable child containment system of any preceding claim, further comprising a mobile second module, usable alternatively in a first configuration in combination with the structural support frame and the plurality of modular accessories, and in a second combination independently of the structural support frame and the plurality of modular accessories.

12. The reconfigurable child containment system of Claim 11, wherein the mobile second module comprises an infant co-sleeper for positioning adjacent an adult bed.

13. The reconfigurable child containment system of any preceding claim, wherein the structural support frame comprises at least one resilient member for imparting a bouncing or rocking motion to a selected one of the plurality of modular accessories attached to the structural support frame.

14. The reconfigurable child containment system of any preceding claim, further comprising a projector for projecting images onto a display surface, the projector may be reconfigurable between a first display mode and a different second display mode.

15. The reconfigurable child containment system of any preceding claim, further comprising a monitoring device for monitoring a child positioned in a selected one of the plurality of modular accessories attached to the structural support frame.
